**Europäisches Patentamt**

**European Patent Office**

**Office européen des brevets**

(19)

(11) Veröffentlichungsnummer: **0 059 931**

**B1**

(12)

# EUROPÄISCHE PATENTSCHRIFT

(45) Veröffentlichungstag der Patentschrift:
**15.10.86**

(21) Anmeldenummer: **82101634.2**

(22) Anmeldetag: **03.03.82**

(51) Int. Cl.⁴: **C 25 B 9/00, C 25 B 1/04**

(54) Elektrolyseur für alkalische Wasserelektrolyse und Verfahren zur Herstellung desselben.

(30) Priorität: **05.03.81 DE 3108255**

(43) Veröffentlichungstag der Anmeldung:
**15.09.82 Patentblatt 82/37**

(45) Bekanntmachung des Hinweises auf die Patenterteilung:
**15.10.86 Patentblatt 86/42**

(84) Benannte Vertragsstaaten:
**CH DE FR GB IT LI**

(56) Entgegenhaltungen:
**EP-A-0 022 252
DE-A-2 914 094
FR-A-2 386 148
FR-A-2 413 481
FR-A-2 446 868**

**Ullmanns Encyklopädie der technischen Chemie,
Bd. 9, 1975, Verlag Chemie, Weinheim/Bergstrasse,
Seite 337**

(73) Patentinhaber: **Kernforschungsanlage Jülich
Gesellschaft mit beschränkter Haftung, Postfach
1913, D-5170 Jülich 1 (DE)**

(72) Erfinder: **Divisek, Jiri, Dr., Gutenbergstrasse 34,
D-5170 Jülich (DE)**
Erfinder: **Schmitz, Heinz, Buchenweg 7, D-5170
Jülich (DE)**

EP 0 059 931 B1

## Beschreibung

Die Erfindung bezieht sich auf einen Elektrolyseur für alkalische Wasserelektrolyse mit Zellen, die zwischen zwei bipolaren Trennplatten eine Sandwichstruktur aus einem Diaphragma mit beidseits daran anliegenden aktivierten porösen nickelhaltigen Elektroden sowie aus mit den Elektroden in Kontakt befindlichen, die Gasabgabe zulassenden, elektrisch leitenden Stützelementen auf der dem Diaphragma abgewandten Elektrodenseite aufweisen, sowie auf ein Verfahren zur Herstellung desselben.

Für die Wasserelektrolyse, die als eine zweckmäßige und wirtschaftliche Methode zur Wasserstoffgewinnung im großen Stile weltweit untersucht wird, steht eine gut entwickelte Technologie zur Verfügung. Die gegenwärtigen Elektrolyseure werden allgemein als bipolare Einheiten konstruiert. Die Arbeitsspannung von solchen Zellen liegt generell zwischen 1,8 - 2,0 V bei einer relativ niedrigen Stromdichte von 200 - 300 mA/cm$^2$. Die aufgrund der Reaktionsenthalpie berechnete Energieausbeute von solchen Zellen ist deshalb sehr schlecht. Für eine hundertprozentige Ausbeute müßte die Gesamtzellspannung bei wirtschaftlich vertretbaren Stromdichten ca. 1,50 V betragen. Dies zu erreichen ist das erklärte Ziel aller gegenwärtigen Entwicklungen auf dem Gebiet der alkalischen Wasserelektrolyse. Die größten Hindernisse auf dem Wege dazu sind:

i) eine zu niedrige Arbeitstemperatur des Wasserelektrolyseurs. Diese wird durch das nur bei niedrigen Temperaturen beständige, allgemein verwendete Asbestdiaphragma bedingt;

ii) eine ungenügende Aktivität der Elektroden und

iii) eine nicht befriedigende Zellkonstruktion, die die Vorteile der einzelnen Zellkomponenten (aktive Elektroden, Diaphragma) nicht optimal ausnutzt.

Die vorliegende Erfindung betrifft nun insbesondere eine Verbesserung der Konstruktion der Elektrolysezellen, für die bislang zwei Haupttypen bekannt sind:

Die am häufigsten angewandte Zellkonstruktion basiert auf dem Konzept von Zdansky-Lonza (vgl. Lurgi Express Information, T 1084/ 6.73), wonach die Zelle folgende Konstruktionselemente umfaßt:

Zwei sandwichartig mit einem mittleren Asbestdiaphragma vereinigte Elektroden aus Nickelnetz oder -lochblech, zwischen zwei bipolaren Platten in Form von Waffelblech, dessen eiförmige Vorsprünge in Druckkontakt mit den Elektroden stehen. Die sandwichartige Bauweise der Elektroden minimalisiert die Elektrodenabstände, so daß die ohmschen Spannungsabfälle im Elektrolyten weitgehend eliminiert werden können.

Diese schon ziemlich optimale Zellenkonzeption erfüllt jedoch die Punkte i) und ii) noch nicht, d.h. die Netzelektroden besitzen keine befriedigende elektrochemische Aktivität und das Asbestdiaphragma verbietet höhere Arbeitstemperaturen.

Praktisch alle bekannten Vorschläge zur Erhöhung der Elektrodenaktivität basieren auf einer Vergrößerung der Elektrodenoberfläche durch katalytisch wirkende poröse Beschichtungen mit hoher innerer Oberfläche. Wenn man solche poröse Elektroden entsprechend dem vorstehend beschriebenen Bauprinzip mit der bipolaren Platte per Druckkontakt verbindet, so ergeben sich insbesondere auf der Anodenseite aufgrund von Oxidschichtbildungen so hohe Übergangswiderstände, daß die durch die Aktivierung erzielten Gewinne durch Verminderung der Überspannung wegen ohmscher Spannungsabfälle an diesen Übergängen wieder verlorengehen.

Die DE-A-29 14 094 beschreibt derartige poröse aktive Nickelelektroden, die einen Metallnetzträger aufweisen.

Erzeugt man nun gemäß eines zweiten Zellkonstruktionstyps die aktive Elektrodenschicht auf der bipolaren Platte, um diese Verluste zu vermeiden, so resultieren neue ohmsche Spannungsabfälle in dem durch das Produktgas erfüllten Elektrolytraum zwischen der Elektrode und dem Diaphragma. Diese Problematik wird am besten in der Arbeit "Improvements in Electrolysis Technology in Alkaline Solution" von Appleby und Crepy (Proc. 2nd World Hydrogen Energy Conf., Zürich, Aug. 1978, S. 227 - 240; s. insbesondere Abb. 5) beschrieben.

Die EP-A-22 252 beschreibt eine mit einem gerüstgebenden Diaphragma auf NiO-Basis vorgesehene Sandwich-Anordnung mit beidseits auf das Diaphragma aufgebrachten porosen Schichtelektroden und daran anliegenden Stromverteilern.

Nach einem anderen Konzept werden sog. Vorelektroden, die aus einem elektrokatalytisch beschichteten perforierten Blech bestehen, z.B. aus Streckmetall (vgl. Krebskosmo-Information Nr. 5 - Wasserelektrolyse-Fig. 4 und Text) verwendet. Diese Vorelektroden aus Streckmetall sind fest mit den bipolaren Platten durch Schweißstellen verbunden, so daß keine Kontaktverluste entstehen können. Aber auch in diesem Fall bleiben die durch den Lösungswiderstand verursachten Spannungsverluste weitgehend erhalten. Eine vollständige Lösung beider Probleme böte eine fest und ohne Druckkontakte mit der bipolaren Platte verbundene, aktivierte poröse Elektrode, die sandwichartig direkt auf dem Separator ohne Zwischenräume aufliegt. Diese Idee wurde jedoch technisch noch nicht realisiert, da man bisher keine einfache und gleichzeitig auch wirtschaftlich vernünftige Möglichkeit zur Realisierung dieses Vorschlages finden konnte.

Aus der FR-A-2 386 148 ist eine Elektrolyseureinheit aus Diaphragma und Elektroden bekannt, bei der ein poröses Diaphragma (z.B. aus Polyvinylchlorid) mit netzartigen Elektrodenschichten (insb. aus porösem Nickel) versehen ist, die vermittels einer versteifend wirkenden Verankerungsschicht fest mit dem Diaphragma verbunden sind. Ein eng angefügtes grobmaschiges Metallnetz dient als Stromverteiler für die Elektroden.

Ziel der Erfindung ist daher die Verbesserung der Konstruktion eines Elektrolyseurs für die alkalische Wasserelektrolyse, wobei ausgezeichnete Wirtschaftlichkeit mit insbesondere hoher Lebensdauer verbunden sein soll.

Der für diesen Zweck entwickelte erfindungsgemäße Elektrolyseur der eingangs genannten Art ist im wesentlichen dadurch gekennzeichnet, daß die Elektroden einen feinen Metallnetzträger aufweisen, der über seine Fläche hinweg mit den Stützelementen verschweißt ist.

Ein Verfahren zur Herstellung eines solchen Elektrolyseurs ist dadurch gekennzeichnet, daß man entweder

a) einen auf seiner Rückseite mit angeschweißten Stützelementen verschweißten feinen Metallnetzträger mit einer Raneynickel- oder Carbonylnickelsinterschicht und/oder galvanisch aufgebrachten Ni/Zn-Schicht versieht, diese Anordnung nach Aktivierung mit Alkalilauge mit der Metallnetzträgervorderseite beidseits eines Diaphragmas durch einfaches Zusammenlegen anordnet und diese Anordnung zusammen mit Trennplatten einspannt, oder

b) auf ein poröses Nickeloxiddiaphragma beidseits einen feinmaschigen und auf seiner vom Diaphragma abgewandten Seite mit Stützelementen verschweißten Metallnetzträger auflegt und eine Raneynickel- oder Carbonylnickel-Sinterschicht aufbringt und/oder Ni/Zn abscheidet, die Anordnung durch Laugebehandlung aktiviert und zwischen Trennplatten einspannt, wobei das Diaphragma vorab vorzugsweise mit einem porösen Nickelüberzug versehen wird.

Das feine Metallnetz wird anodisch durch ein Nickelnetz oder vernickeltes Netz gebildet, während kathodisch auch ein Eisenbzw. Stahlnetz verwendet werden kann.

Bei einer solchen Anordnung wird durch die elektrisch leitenden Stützelemente, die mit dem Elektrodennetz elektrisch leitend verbunden sind, für eine gleichmäßige Potentialverteilung über die Elektrode hinweg gesorgt, wobei durch die Ausfüllung des Gitters mit aktivem Nickel Überspannungen verhindert werden. Auf diese Weise können im technischen Maßstabe Abscheidungsdaten erreicht werden, wie sie sonst nur bei Laboranordnungen gefunden werden.

Die Stützelemente werden vorzugsweise durch in Gasabgaberichtung parallel angeordnete Gitterstäbe gebildet, die über die Fläche hinweg punktförmig mit dem Metallnetz der Elektroden verschweißt sind, oder auch durch ein entsprechend aufgeschweißtes Streckmetallelement.

Als besonders zweckmäßig erweist sich eine optimale Abstimmung der einzelnen Elemente der Zelle aufeinander, wozu eine möglichst dünne Elektrodenschicht aus Eisen- bzw. Nickelnetz und porösem Nickel sowie ein angemessener Durchmesser der stabförmigen Stützelemente und abgestimmter Abstand derselben untereinander sowie eine zweckmäßige Folge von Schweißstellen zur Verbindung zwischen Metallnetz und Stützelementen beiträgt. Ein bevorzugtes Metallnetz ist von einer Drahtstärke von etwa 0,1 - 0,2 mm und einer Maschenweite von 0,2 - 0,3 mm. Die Beschichtung dieses Metallnetzes mit aktivem Nickel, die insbesondere durch eine durch Flammoder Plasmaspritzen aufgetragene Raneynickelschicht gebildet wird, die vorzugsweise durch galvanische Nickel/Zink-Abscheidung konsolidiert und durch Laugebehandlung aktiviert worden ist, hat zweckmäßigerweise eine Schichtdicke von 0,2 mm. Der Schweißstellenabatand liegt vorzugsweise bei 0,1 - 0,5 cm.

Abwandlungen und weitere Einzelheiten der Herstellung geeigneter Elektrodenschichten finden sich in der DE-OS 29 14094 der Anmelderin.

Als Diaphragma eignet sich insbesondere ein Nickeloxiddiaphragma, wie es von der Anmelderin in der DE-OS 29 27 566 und der DE-DS 30 31064 beschrieben worden ist.

Die durch galvanische Abscheidung von Nickel/Zink in bzw. auf einer porösen Sinterschicht und nachfolgende Herauslösung von Zink aktivierten Elektrodenschichten haben aufgrund ihrer galvanisch konsolidierten Struktur mit Makroporen und Mikroporen besonders günstige Eigenschaften. Dabei werden die Makroporen im wesentlichen durch die Körnung des zur Herstellung des Sinterkörpers benutzten Pulvers bestimmt, während sich die Mikroporosität aus der Nickel/Zinkabscheidung mit Herauslösung von Zink, wie beschrieben, ergibt. Dabei muß die Makroporosität der Elektrode der Gasabgabe angemessen sein, wobei die Porengrößen üblicherweise in der Gegend von 10 bis 100 µm liegen.

Das Diaphragma hat dagegen eine um mindestens eine Zehnerpotenz geringere Porengröße, die keinesfalls über 10 µm liegen soll. Als brauchbar hat sich beispielsweise ein Diaphragma mit einer mittleren Porengröße von 2 µm erwiesen, dessen Porendurchmesser zwischen 0,7 und 3 bis 4 µm liegen. Üblicherweise wird man Diaphragmen mit mittleren Porengrößen in der Gegend von 0,5 bis 5 µm wählen, insbesondere mit Poren um etwa 1 bis 2 µm.

Das als Träger der porösen Elektrodenschicht wirkende Metallnetz kann, wie erwähnt, in üblicher Weise auf der Kathodenseite aus Eisen bzw. Stahl bestehen, während anodisch Nickelnetz oder vernickeltes Netz verwendet wird. Ebenfalls in üblicher Weise kann die poröse Elektrodenschicht neben Nickel katalytische Zusätze insbesondere von Kobalt oder auch Lanthan oder Strontium enthalten.

Gemäß einer weiteren Variante der Elektrodenschichterzeugung kann man Raneynickelpulver gemischt mit Methylzellulose in einen Netzträger hineinwalzen und den so erhaltenen Vorkörper nach einer Sinterbehandlung durch Einwirkung von Lauge aktivieren.

Weitere Besonderheiten der Erfindung gehen aus den Patentansprüchen hervor.

Nachfolgend wird die Erfindung anhand von Beispielen unter Bezugnahme auf die angefügten Zeichnungen beschrieben: es zeigen

Fig. 1a bis 1c den Aufbau einer Zelle eines erfindungsgemäßen Elektrolyseurs; und

Fig. 2 und 3 Strom-Spannungs-Kennlinien für erfindungsgemäße Anordnungen und zum Vergleich herangezogene Anordnungen.

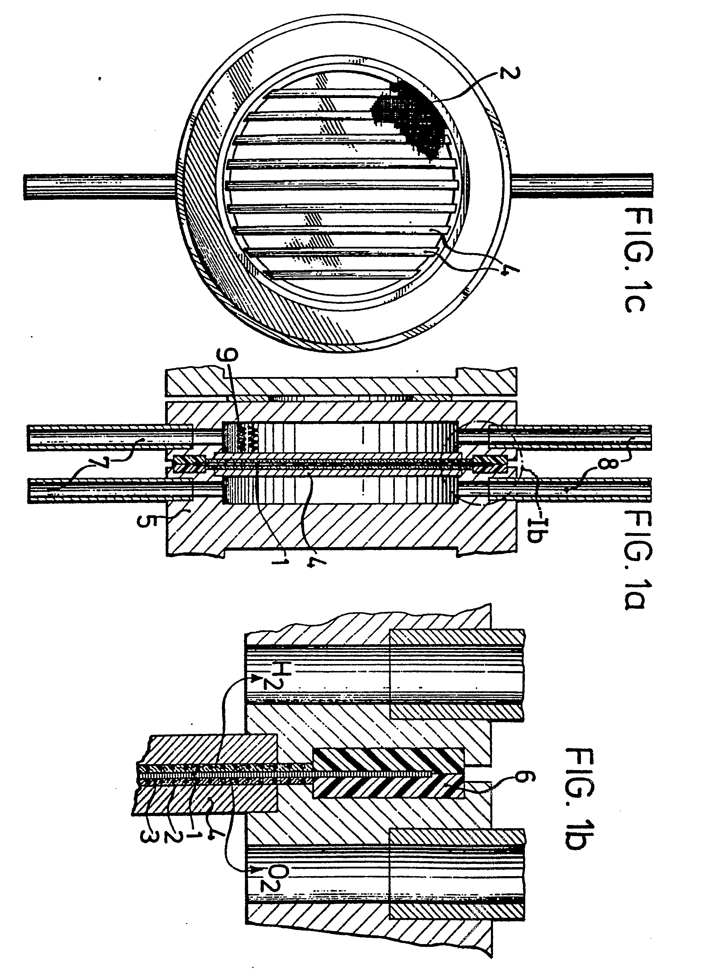

Der in Fig. 1 im Schema gezeigte Aufbau der erfindungsgemäßen Zellen eines Elektrolyseurs, der in Figur 1a (und in Figur 1b im Detail vergrößert) im Schnitt dargestellt ist, umfaßt ein Diaphragma 1, das beidseits sandwichartig mit Elektroden belegt ist, die durch ein feines Nickelnetz 2 und eine poröse Elektrodenschicht 3 gebildet werden. Das Nickelnetz 2 ist mit den Stützelementen 4 leitend verbunden, insbesondere verschweißt, die durch Stäbe, wie in Figur 1c angedeutet, oder Streckmetall gebildet werden können. Die Zelle wird beidseits durch metallische Trennplatten 5 abgeschlossen, von denen das Diaphragma durch eine isolierende Diaphragmaabdichtung 6 getrennt ist, während eine leitende Verbindung zwischen den Stützelementen 4 und den Trennplatten 5 besteht. Auf diese Weise befindet sich die poröse Elektrodenschicht 3 über die Fläche hinweg auf dem gleichen Potential wie die Trennplatte 5. Die Ansätze 7 dienen zur Einleitung des Elektrolyten und über die Ansätze 8 verläßt ein Gas/Flüssigkeitsgemisch die Zelle. Statt der Ansätze (7, 8) können selbstverständlich auch in bekannter Weise quer verlaufende Kanäle vorgesehen sein.

Die auf der linken Seite von Fig. 1a getrennt gezeichneten Platten 5 benachbarter Zellen können selbstverständlich auch (wie auf der rechten Seite von Fig. 1a angedeutet) aus einem Stück bestehen. Bei großflächigen Ausführungen des Elektrolyten mit Elektroden, die sandwichartig an ein mittleres Diaphragma angepreßt werden, sind für ein gutes flächenhaftes Anliegen derselben zusätzliche über die Fläche verteilte (insbesondere elektrisch leitende) Federelemente 9 zwischen der Trennplatte 5 und dem Stützelement 4 zweckmäßig, wie sie in Fig. 1a (unten links) angedeutet sind.

Das für den Elektrolyten bzw. für Ionen durchlässige Diaphragma 1 ist sehr dünn (von etwa 0,5 mm Dicke) und hat damit einen geringen Widerstand.

Die in Fig. 1a (links) angedeutete Zellvariante, die in sich geschlossen und über Einzelverbindungen mit den angrenzenden Nachbarzellen mechanisch und elektrisch verbunden ist, bietet die Möglichkeit, Einzelzellen bequem auszutauschen, ohne daß der Zusammenhalt sämtlicher Komponenten des Elektrolyseurs für den Wechsel aufgegeben werden muß.

Die Herstellung des sandwichartig mit Elektroden und Stützelementen versehenen Diaphragmas wird nachfolgend anhand bei von Beispielen erläutert:

### Beispiel A

Auf ein Nickeloxiddiaphragma, wie es in der DE-OS 30 31 064 beschrieben ist, wurde beidseits ein feinmaschiges Nickelnetz aufgelegt, das auf der dem Diaphragma abgewandten Seite mit Gitterstäben über die Fläche hinweg punktförmig verschweißt war. Diese Anordnung wurde beidseits durch Flammspritzen mit einer Raneynickelschicht (Elektrodenschicht) versehen, wobei beim Auftrag derselben auf eine angemessene Hinterschichtung der Gitterstäbe geachtet wurde. Gemäß einer noch mehr bevorzugten Variante wird zusätzlich vorab das Diaphragma mit einem dünnen porösen Nickelüberzug (von etwa 10 bis 50 μm Dicke) durch Flammspritzen versehen.

Die wie vorstehend erzeugte Elektrodenschicht wurde durch eine elektrochemische Abscheidung von Nickel/Zink verstärkt und die Anordnung in üblicher Weise durch Behandlung mit Lauge aktiviert. Mit den Gitterstäben wurden schließlich die bipolaren Endplatten leitend verbunden.

### Beispiel B

Ein mit Gitterstäben wie in Beispiel A über die Fläche hinweg durch wiederkehrende Punktschweißungen leitend verbundenes Nickelnetz, das ferner auf der Stützelementseite mit einer bipolaren Endplatte fest verschweißt war, wurde durch Flammspritzen mit einer Raneynickelschicht und elektrochemisch mit einer Nickel/Zink-Abscheidung versehen. Nach Aktivierung durch Laugebehandlung in bekannter Weise wurde diese Anordnung beidseits eines mittleren Nickeloxiddiaphragmas vorgesehen. Anstelle des Nickeloxiddiaphragmas können bei der Herstellungsweise des Elektrolyseurs nach diesem Beispiel auch andere Separatoren wie Ionenaustauschermembranen (z.B. ein Separator auf der Basis von Polyantimonsäure, wie er von Vandenborre, H.u.a. in "Seminar on Hydrogen as an Energy Vector", EEC-Report EUR 6085 Brussel 1978, Seite 161 beschrieben wird) und dergleichen verwendet werden.

In beiden Fällen (d.h. sowohl bei Beispiel A als auch bei Beispiel B) kann statt der kombinierten Raneynickel, und Ni/Zn-Abscheidung auch nur Raneynickel allein durch Flamm- oder Plasmaspritzen oder nur Ni/Zn galvanisch auf das Nickelnetz aufgetragen werden. Man kann auch Carbonylnickel durch Flamm- oder Plasmaspritzen auftragen und zusätzlich galvanisch Ni/Zn abscheiden. Die günstigsten (niedrigsten) Spannungswerte werden jedoch durch die kombinierte Raneynickel- und Ni/Zn-Abscheidung, wie in den Beispielen A und B angegeben, erreicht.

## Vergleichsbeispiel

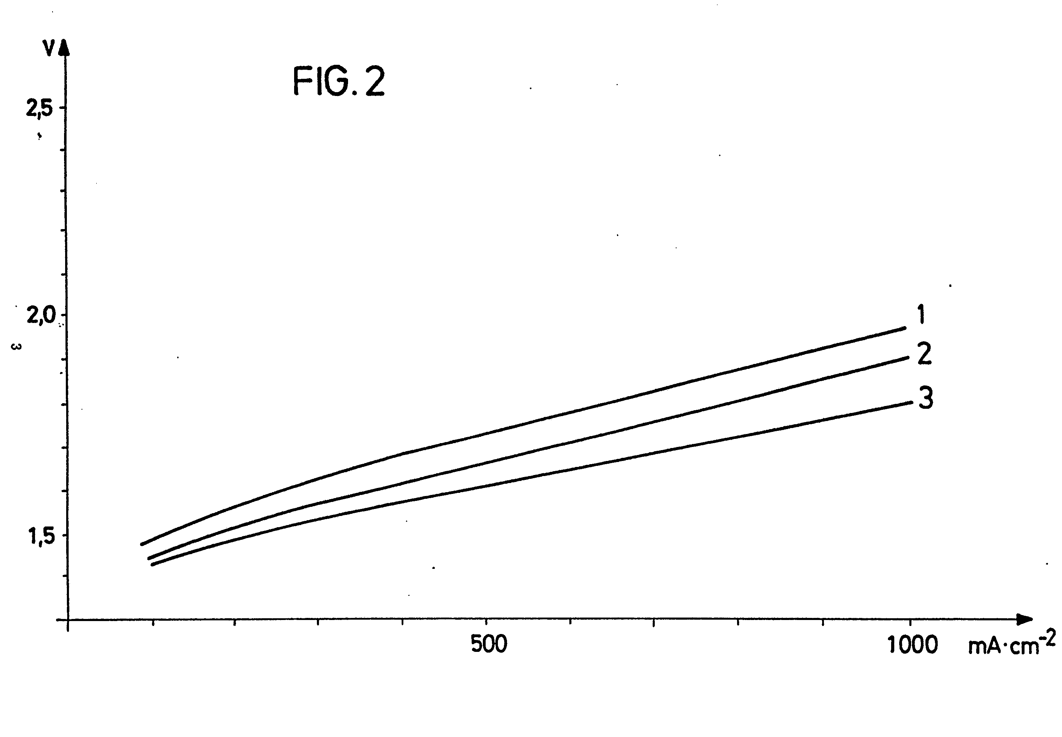

Ein Nickeloxiddiaphragma wurde beidseits mit aktiven Elektroden beschichtet und in ähnlicher Weise wir gemäß Beispiel A bzw. B zwischen Endplatten vorgesehen, wobei der Stromkontakt der Elektroden durch Druckkontakt mit einem flächenhaften Streckmetallelement hergestellt wurde, das zwischen Endplatte und beschichtetem Diaphragma eingepreßt worden war. Bei dieser Anordnung bilden sich während der Elektrolyse auf der Anodenseite zwischen den Kontaktstellen Oxidschichten aus, die einen beträchtlichen ohmschen Spannungsabfall verursachen, der eine Erhöhung der Zellspannung für gleiche Stromdichte erforderlich macht. Die Stromspannungskennlinie dieser Anordnung ist in Figur 2 als Kurve 1 eingetragen.

Durch katalytische Beschichtung eines fest mit einer bipolaren Endplatte verschweißten Streckmetallelements wurden Elektroden bekannter Art hergestellt. Diese wurden für den Zusammenbau einer Zelle in Sandwich-Anordnung verwendet. Auch bei dieser Anordnung treten im gaserfüllten Elektrolyten Spannungsverluste auf, die eine Erhöhung der Zellspannung notwendig machen. Die Kennlinie dieser Anordnung ist sls Kurve 2 in Figur 2 eingetragen.

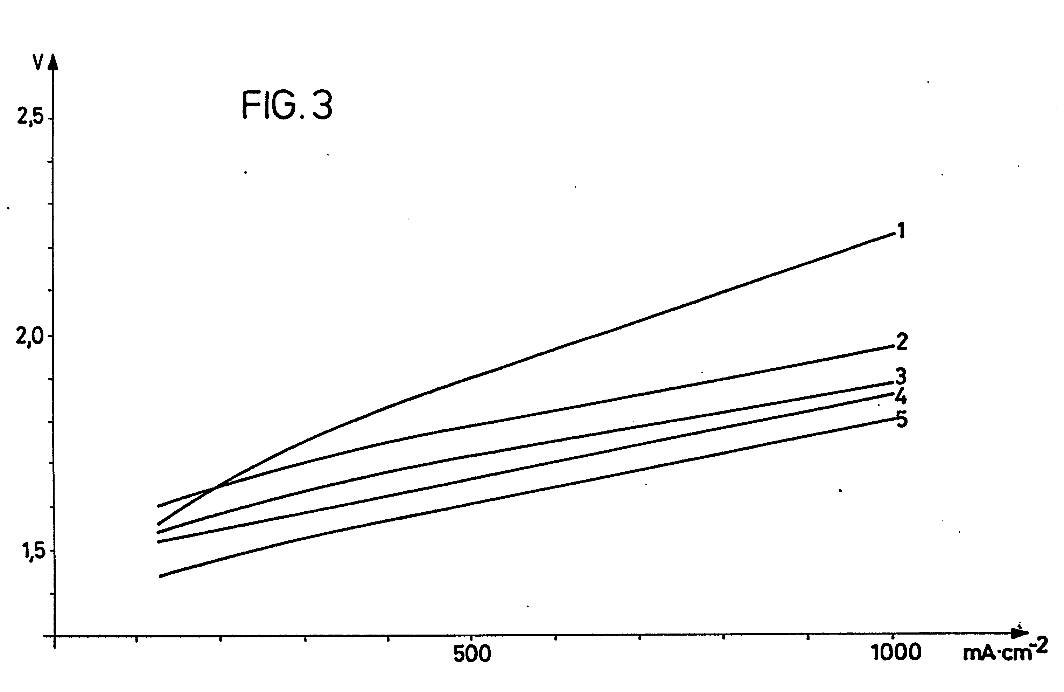

Eine dritte Kurve wurde mit einer Anordnung gemäß Beispiel B für eine Wasserelektrolyse bei 100°C in 30%iger KOH (wie bei den Kurven 1 und 2) aufgenommen. In allen drei Fällen wurde eine katalytische Beschichtung von vergleichbarer Qualität erzeugt, wie an Hand spannungsfreier Messungen nachgewiesen werden konnte. Aus Figur 2 ist die gemäß der Erfindung (Kurve 3) erzielte Verbesserung deutlich ersichtlich. Die Elektrolyse erfolgte jeweils bei Atmosphärendruck. In Figur 3 werden schließlich die mit der erfindungsgemäßen Anordnung erreichten Stromspannungskennlinien mit denjenigen von anderen bekannten Zellen verglichen, für die von den Herstellern entsprechende Daten angegeben werden. Alle Kurven wurden etwa unter ähnlichen äußeren Bedingungen der Elektrolyse, d.h. für eine Temperatur um 100°C, mittleres Druckniveau und vergleichbare Elektrodengröße, aufgenommen. Nachfolgend ist für die einzelnen Kurven der Autor und das Literaturzitat sowie die Elektrolysetemperatur und Elektrodengröße und - soweit vorhanden - der angewandte Druck angegeben:

Kurve 1: N. Wakabayashi et al, Proc. 3rd World Hydrogen Energy Conf., Tokyo, 23.26.6.1980, S.58 (Temp.118°C, Elektrode 50 cm$^2$).

Kurve 2: H.Vandenborre et al, Seminar Hydrogen, Comm. Europ. Comm., Brussels, 12./14.2.1980, S.143 (Temp.100°C, Elektrode 40 cm$^2$, 3bar).

Kurve 3: J.N. Murray, M.R.Yaffe, Proc. 3rd WHEC, Tokyo, 23.-26.6. 1980, S.15 (Temp. 100°C, Elektrode 300cm$^2$)

Kurve 4: L.J. Nuttal, J.H.Russell, Int.J. Hydrogen Energy, 5,75 (1980). (SPE-Elektrolyse; Temp. 83°C, Elektrode 45 cm, 7 bar)

Kurve 5: Elektrolysezelle nach der Erfindung. Identisch mit Kurve 3, Fig.2 (Temp. 100°C, Elektrode 30 cm$^2$

Ein Vergleich dieser Kurven zeigt deutlich die große Leistungsfähigkeit des erfindungsgemäßen Konzepts.

## Patentansprüche

1. Elektrolyseur für alkalische Wasserelektrolyse mit Zellen, die zwischen zwei bipolaren Trennplatten (5) eine Sandwichstruktur aus einem Diaphragma (1) mit beidseits daran anliegenden aktivierten porösen nickelhaltigen Elektroden (2, 3) sowie aus mit den Elektroden (2, 3) in Kontakt befindlichen, die Gasabgabe zulassenden, elektrisch leitenden Stützelementen (4) auf der dem Diaphragma (1) abgewandten Elektrodenseite aufweisen,
dadurch gekennzeichnet
daß die Elektroden (2, 3) einen feinen Metallnetzträger aufweisen, der über seine Fläche hinweg mit den Stützelementen (4) verschweißt ist.

2. Elektrolyseur nach Anspruch 1,
dadurch gekennzeichnet,
daß als Stützelemente (4) in Gasabgaberichtung parallel angeordnete Gitterstäbe dienen.

3. Elektrolyseur nach Anspruch 1 oder 2,
gekennzeichnet durch
Federelemente (9) zwischen dem Stützelement (4) und der bipolaren Platte (5) innerhalb der Zelle.

4. Elektrolyseur nach einem der vorangehenden Ansprüche,
dadurch gekennzeichnet,
daß die Elektroden (2, 3) eine poröse Nickelschicht aufweisen, die mittels Auftragens einer Raneynickelsinterschicht im Plasma- oder Flammspritzen auf den Metallnetzträger und anschließender Laugebehandlung gebildet wird.

5. Elektrolyseur nach einem der vorangehenden Ansprüche,
dadurch gekennzeichnet,
daß das Diaphragma (1) aus porösem Nickeloxid besteht.

6. Elektrolyseur nach einem der vorangehenden Ansprüche,

gekennzeichnet durch

eine Serie von aus sandwichartig mit Elektroden (2, 3) und Stützelementen (4) versehenen Diaphragmen (1) zwischen Trennplatten (5) gebildeten in sich geschlossenen Einheiten, die jeweils einzeln mit der nächstfolgenden Nachbareinheit verbunden sind.

7. Elektrolyseur nach Anspruch 2,

dadurch gekennzeichnet,

daß die Gitterstäbe einen Durchmesser von 1 - 3 mm und einen Abstand von 4 - 8 mm haben.

8. Elektrolyseur nach einem der vorangehenden Ansprüche,

gekennzeichnet durch

einen Schweißstellenabstand der Verbindung von Metallnetzträger und Stützelementen (4) von 1 - 2 mm, höchstens jedoch 5 - 10 mm.

9. Elektrolyseur nach einem der vorangehenden Ansprüche,

dadurch gekennzeichnet,

daß der Metallnetzträger ein Eisen- bzw. Nickelnetz mit einer Drahtstärke von 0,1 - 0,3 mm und einer Maschenweite von 0,2 bis 0,4 mm ist.

10. Verfahren zur Herstellung eines Elektrolyseurs nach einem der vorangehenden Ansprüche,

dadurch gekennzeichnet,

daß man entweder (a) einen auf seiner Rückseite mit angeschweißten Stützelamenten (4) verschweißten feinen Metallnetzträger mit einer Raneynickel- oder Carbonylnickelsinterschicht und/oder galvanisch aufgebrachten Ni/Zn-Schicht versieht, diese Anordnung nach Aktivierung mit Alkalilauge mit der Metallnetzträgervorderseite beidseits eines Diaphragmas durch einfaches Zusammenlegen anordnet und diese Anordnung zusammen mit Trennplatten (5) einspannt,

oder

(b) auf ein poröses Nickeloxiddiaphragma (1) beidseits einen feinmaschigen und auf seiner vom Diaphragma (1) abgewandten Seite mit Stützelementen (4) verschweißten Metallnetzträger auflegt und eine Raneynickel- oder Carbonylnickel-Sinterschicht aufbringt und/oder Ni/Zn abscheidet, die Anordnung durch Laugebehandlung aktiviert und zwischen Trennplatten (5) einspannt, wobei das Diaphragma (1) vorab vorzugsweise mit einem porösen Nickelüberzug versehen wird.

**Claims**

1. Electrolyser for alkaline water electrolysis with cells which comprise between two bipolar partition plates (5) a sandwich structure consisting of a diaphragm (1) with activated porous nickel-containing electrodes (2, 3) adjoining said diaphragm at both sides, and of electrically conducting supporting elements (4) at the electrode side remote from the diaphragm (1) which supporting elements are in contact with the electrodes (2, 3) and allow discharge of gas, characterised in that the electrodes (2, 3) comprise a fine metal mesh support which is welded over its surface to the supporting elements (4).

2. Electrolyser according to claim 1, characterised in that grid bars arranged parallel in the gas discharge direction serve as supporting elements (4).

3. Electrolyser according to claim 1 or 2, characterised by spring elements (9) between the supporting element (4) and the bipolar plate (5) inside the cell.

4. Electrolyser according to one of the preceding claims, characterised in that the electrodes (2, 3) have a porous nickel layer which is formed by application of a Raney nickel sinter layer by plasma or flame spraying on to the metal mesh support and subsequent alkali treatment.

5. Electrolyser according to one of the preceding claims, characterised in that the diaphragm (1) consists of porous nickel oxide.

6. Electrolyser according to one of the preceding claims, characterised by a series of self-contained units which are formed of diaphragms (1) between partition plates (5) and provided with electrodes (2, 3) and supporting elements (4) in sandwich fashion, and which are each connected individually to the next neighbouring unit in succession.

7. Electrolyser according to claim 2, characterised in that the grid bars have a diameter of 1 - 3 mm and a spacing of 4 - 8 mm.

8. Electrolyser according to one of the preceding claims, characterised by a welding zone spacing of the connection between metal mesh support and supporting elements (4) of 1 - 2 mm, but at the most 5 - 10 mm.

9. Electrolyser according to one of the preceding claims, characterised in that the metal mesh support is an iron or nickel mesh with a wire thickness of 0.1-0.3 mm and an aperture width of 0.2 to 0.4 mm.

10. Process for the manufacture of an electrolyser according to one of the preceding claims, characterised in that either

a) a fine metal mesh support welded at its rear side to welded-on supported elements (4) is provided with a Raney nickel or carbonyl nickel sinter layer and/or electro-deposited Ni/Zn layer, then after activation with alkaline solution this arrangement is arranged with the metal mesh support front side on the two sides of a diaphragm by simple attaching, and this arrangement is held together with partition plates (5), or

b) there is applied to a porous nickel oxide diaphragm (1), at both sides, a fine-apertured metal mesh support welded to supporting elements (4) at its side remote from the diaphragm (1), and a Raney nickel or carbonyl nickel sinter layer is applied and/or Ni/Zn is applied by deposition, the arrangement is activated by alkali treatment and clamped between partition plates (5), the diaphragm (1) first being provided preferably with a porous nickel coating.

**Revendications**

1. Electrolyseur pour l'électrolyse alcaline de l'eau, comprenant des cellules qui, entre deux plaques de séparation (5) bipolaires, présentent une structure stratifiée constituée d'un diaphragme (1) sur les deux côtés duquel sont appliquées des électrodes (2, 3) poreuses, activées et contenant du nickel, ainsi que, du côté des électrodes, éloigné du diaphragme (1), des éléments d'appui (4), conducteurs de l'électricité, autorisant la sortie des gaz et se trouvant en contact avec les électrodes (2, 3), caractérisé en ce que les électrodes (2, 3) présentent un support fin en forme de grille métallique, qui est soudé sur sa surface aux éléments d'appui (4).

2. Electrolyseur suivant la revendication 1, caractérisé en ce que des barreaux de grille, disposés parallèlement à la direction de sortie des gaz, servent d'éléments d'appui (4).

3. Electrolyseur suivant la revendication 1 ou 2, caractérisé par des éléments à ressort (9) entre l'élément d'appui (4) et la plaque bipolaire (5) à l'intérieur de la cellule.

4. Electrolyseur suivant l'une des revendications précédentes, caractérisé en ce que les électrodes (2, 3) présentent une couche poreuse en nickel, qui est formée au moyen d'un dépôt d'une couche frittée en nickel Raney, par projection de plasma ou par projection de métal fondu, sur le support en forme de grille métallique et ensuite par traitement de lixiviation.

5. Electrolyseur suivant l'une des revendications précédentes, caractérisé en ce que le diaphragme (1) est en oxyde de nickel poreux.

6. Electrolyseur suivant l'une des revendications précédentes, caractérisé par une série d'unités en soi fermées, formées, entre des plaques de séparation (5), de diaphragmes (1) munis, à la manière d'un stratifié, d'électrodes (2, 3) et d'éléments d'appui (4), ces unités étant reliées individuellement à l'unité immédiatement voisine.

7. Electrolyseur suivant la revendication 2, caractérisé en ce que les barreaux de grille ont un diamétre de 1 à 3 mm et un intervalle de 4 à 8 mm.

8. Electrolyseur suivant l'une des revendications précédentes, caractérisé par un intervalle entre les emplacements de soudure de la liaison du support en forme de grille métallique et des éléments d'appui (4) de 1 à 2 mm mais, au plus, de 5 à 10 mm.

9. Electrolyseur suivant l'une des revendications précédentes, caractérisé en ce que le support en forme de grille métallique est une grille en fer ou en nickel, ayant une épaisseur de fil métallique de 0,1 à 0,3 mm et une ouverture de maille de 0,2 à 0,4 mm.

10. Procédé de fabrication d'un électrolyseur suivant l'une des revendications précédentes, caractérisé en ce qu'il consiste ou bien:

(a) à munir la face postérieure d'un support fin, en forme de grille métallique soudée à des éléments d'appui (4),d'une couche frittée en nickel Raney ou en nickel carbonyle et/ou d'une couche de Ni/Zn déposée par électrolyse, à placer cet agencement, après activation par une lessive alcaline, en l'appliquant simplement par le côté antérieur du support en forme de grille métallique des deux côtés d'un diaphragme, et à bloquer cet agencement ensemble avec des plaques de séparation (5), ou bien

(b) à appliquer sur les deux côtés d'un diaphragme (1) poreux en oxyde de nickel un support en forme de grille métallique,à mailles fines, soudé du côté éloigné du diaphragme (1),à des éléments d'appui (4) et à déposer sur le diaphragme une couche frittée en nickel Raney ou en nickel carbonyle et/ou à y déposer du Ni/Zn, à activer cet agencement par traitement par lixiviation et à le bloquer entre deux plaques de séparation (5), le diaphragme (1) étant muni d'abord de préférence d'un revêtement poreux de nickel.

FIG. 1c

FIG. 1a

FIG. 1b

FIG. 2

0 059 931

FIG.3